# EUROPEAN PATENT SPECIFICATION

(11) **EP 1 754 036 B1**
(45) Date of publication and mention of the grant of the patent: **16.02.2022**
(21) Application number: 05728127.1
(22) Date of filing: 11.03.2005
(51) Int. Cl.: G01L 13/02, G01N 11/08

(54) **MICRO SLIT VISCOMETER WITH MONOLITHICALLY INTEGRATED PRESSURE SESONRS**
MIKROSCHLITZ-VISKOMETER MIT MONOLITHISCH INTEGRIERTEN DRUCKSENSOREN
VISCOMÈTRE À MICROFENTES PRÉSENTANT DES CAPTEURS DE PRESSION MONOLITHIQUEMENT INTÉGRÉS

(30) Priority: 11.03.2004 US 552289 P
(43) Date of publication of application: 21.02.2007
(73) Proprietor: RheoSense, Inc., San Ramon, CA 94583 (US)
(72) Inventor: BAEK, Seong-Gi, Pleasanton, CA 94588 (US)
(74) Representative: Ostertag & Partner Patentanwälte mbB
(86) International application number: PCT/US2005/007869
(87) International publication number: WO 2005/086883

(56) References cited:
- WO-A1-99/26048
- US-A- 4 241 602
- US-A- 4 241 602
- US-A- 5 485 753
- US-A- 5 485 753
- US-A- 5 983 727
- US-A1- 2003 079 547
- US-A1- 2003 079 547

## Description

### BACKGROUND OF INVENTION

Field: This invention is in the field of miniature devices that measures true viscosities of liquid.

State of the art: Viscosity is a measure of resistance of liquid to flow and its value depends on the rate of deformation for Non-Newtonian liquids as described in Dynamics of Polymeric Liquids, Vol. 1, 1987 authored by R.B. Bird, R.C. Armstrong, and O. Hassager. The rate of deformation is given by a shear rate in a unit of (time)⁻¹. The viscosity measured at a known shear rate is "true" viscosity. The dependence of the true viscosity on shear rate is a viscosity curve which characterizes material and is an important factor to consider for efficient processing. But in many cases viscosity is measured under ill-defined test conditions so that shear rate can not be known or calculated. Under ill-defined conditions, the measured viscosity value is only "apparent". Since the true viscosity is measured at a known shear rate, the true viscosity is universal whereas the apparent viscosity is not. Instead, the apparent viscosity depends on the measuring system. For example, as a common practice, a torque of a spindle immersed in a sea of test liquid is measured while the spindle is being rotated at a constant speed. In this case the torque value only yields an apparent viscosity since the test condition is ill defined and a shear rate is not known. At best, the apparent viscosity can be measured as a function of the rotational speed of the spindle. The rotational speed of the spindle can be, in fact, correlated with the shear rate only if a "constitutive equation" for the test liquid is known. However, a "constitutive equation" is not known for almost all Non-Newtonian liquids. Therefore, true viscosity can not be measured with ill-defined test condition for most non-Newtonian liquids.

The methods that give only apparent viscosities have been developed and used for quality controls in manufacturing and material characterization. Various on-line viscometers have been designed for real time viscosity measurement. Prior art Patent Nos. 5,317,908 (Fitzgerald et al.) and 4,878,378 (Harada) are concerned with systems that measure apparent viscosities for process controls. Prior art Patent No. 6,393,898 (Hajduk et al.) describes a system that measures many test liquids simultaneously. These viscometers measure apparent viscosities. However, because of the non-universality of the apparent viscosity measurement, a correlation of the apparent viscosity of a specific sample measured with a specific method to the true viscosity has to be found separately, when desired. Fundamental development of formulations or materials requires a true viscosity measurement. Also, the design of processing equipments and accessories such as dies, molds, extrusion screws, etc., require knowledge of the true viscosity of the materials. However, the apparent viscosity measurement has been used for a quick test as an indication since it is easier and faster to measure and often more economical. The true viscosity is more difficult to get and can be only measured with a few types of instruments: rheometers and capillary viscometers. The rheometers impose a precise and known shear rate on test samples thereby measuring true viscosities. The rheometers are versatile and equipped to measure other properties. Therefore they are usually expensive. Usually large amounts of sample are required for viscosity measurement with rheometers. Also, the rheometers are not well suited for on-line applications. Circular capillary viscometers are another type of instrument that can measure apparent and true viscosities depending on whether a proper compensation is taken into account. The capillary viscometer needs a measurement of pressure drop along the capillary for determining viscosity. Since the capillary is circular, only the pressure at the entrance and exit can be measured. Because of this limitation, the capillary viscometer measures only apparent viscosity unless the entrance effect is corrected by using two different capillaries with different length to diameter ratios. However, the use of two capillaries makes the viscometer bulky and measurements time consuming. Capillary viscometers are shown in prior art: Patent Nos. 6,575,019 (Larson); 4,920,787 (Dual et al.); 4,916,678 (Johnson et al.); and 4,793,174 (Yau). Microfluidic viscometers were also disclosed in prior arts: 6,681,616 (Michael Spaid et al.); 20030182991 (Michael Spaid et al.). Residence time of a marker in a fluidic channel is used to measure the viscosity, which is not a true viscosity unless the test liquid is Newtonian.

Rectangular slit viscometers relevant to the current invention are also used to measure the true viscosity and they are well described in Rheology in Polymer Processing, 1976, authored by C.D. Han. In these viscometers, test liquid flows inside of a rectangular slit flow channel and local pressures along the flow channel are measured with deployed pressure sensors for a given flow rate. In contrast to the capillary viscometer, the inside of the slit is flat so that pressures in the slit can be measured with pressure sensors mounted in the slit. The positions of the pressure sensors have to be sufficiently inside of the flow channel so that pressures of a fully developed flow are measured. From the pressure measurement, wall shear stress can be calculated. As the flow rate is varied, shear rate can be varied. From the measurement of wall shear stress at different shear rates, true viscosities are calculated using the well known Weissenberg-Rabinowitsch correction, which is much simpler than using two separate capillaries in case of using circular capillary viscometers. These viscosity measurements however are only simpler if the width of the flow channel is sufficiently larger than the depth of the flow channel. These slit viscometers need pumping systems for a precise control of the volumetric flow rate of test liquid. Frequently, the slit viscometers are used as an attachment to extruders as the liquids flow out of the extruders. In current practice, the pressure sensors are mounted individually to the plate flush enough to measure unperturbed pressures. However, it is very well known that a perturbation of flow significantly influences pressure measurement, particularly for viscoelastic non-Newtonian liquids. Any slight surface roughness due to the mounting of the pressure sensors may be a source of test sample deposition which degrades long term performance. Mounting of individual pressure sensors to eliminate surface roughness is difficult. Therefore, the measurement accuracy is often compromised depending on how well the individual pressure sensors are mounted in the flow channel. It has been found that the problems described above can be overcome with monolithically integrated pressure sensors in micro slit flow channels. With a single slit geometry, the shear rate can be only changed by the change of volumetric flow rate controlled by the pumping system. Most current slit viscometers are made individually with conventional machining processes, and are made for relatively large samples. Therefore these conventional slit vscometers are not appropriate for measuring viscosities of test samples that are only available in a small quantity. Use of micro slit flow channel with monolithically integrated pressure sensors can be tremendously advantageous. The micro slit viscometers allows the employment of microfabrication processes used to make micro chips and therefore these micro slit viscometers can be made in large quantity on a single wafer. This invention therefore makes the micro slit viscometers extremely cost-effectve.

US 2003/0079547 A1 discloses a rheometer plate with monolithically integrated pressure sensors forming a smooth sensing surface. The rheometer plate includes a plurality of cavities. A single capacitive pressure sensor is formed in each cavity. The pressure applied to the rheometer plate leads to a deflection of the surface over the cavity. This deflection leads to a change in the capacity of the pressure sensor.

US 2003/0079547 A1 also discloses a slit rheometer that comprises a flow channel with multiple cross sections. A rheometer plate with multiple pressure sensors is integrated in the flow channel. The disclosed rheometers allow measuring the viscosity of a fluid with just one single rheometer of that kind. The rheometer is obtained by etching the flow channel in a wafer and then by bonding it to a rheometer plate. The drawback of a slit rheometer of that kind is the complicated etching process of the flow channel. Another problem that occurs is that the part in the flow channel where the cross section changes leads to turbulences.

US 5485753 discloses a pressure sensor consisting of a diaphragm covering a cavity. The diaphragm can be constructed using wafer bonding techniques, The cavity allows the diaphragm to bend if pressure is applied to the diaphragm. Piezo resistive strips are used to read out the deformation of the diaphragm. The pressure sensor can be used to measure relative pressure changes of 10 to 15 PSI on an absolute pressure base of around 3000 PSI. An assembly for measuring the pressure of a liquid under extremely high pressure in a high pressure pipe system. Special precautions as baffles are made to prevent the influence of the flow to the measurements. The shown assembly does not allow measuring the viscosity of fluids. The thickness of a diaphragm, of around 15 microns is suitable in high pressure environment but does not allow the meausurement of small pressures that appear in a micro slit Viscometer. The preaaure sensors shown in US 5485753 are stand alone pressure sensors. When integrated into an environment with a flow the sensors cause turbulence in the pipes or flow channels they are attached to.

US 4241602 teaches a precision continuous flow rheometer. The flow rheometer is used to measure large samples in production processes. A metering pump receives the fluid to be analyzed from a feed stream. The fluid is the applied to a slit or capillary. Pressure sensors are provided in the slit, or the capillary. The sensors measure a pressure drop along the capillary. The pressure sensors in the rheometer are not monolithically integrated into the slit or capillary. This causes turbulances. A fully developed flow will not occur; hence the measured viscosity will be inaccurate. The shown flow rheometer is not suited for small samples of fluids.

### SUMMARY OF INVENTION

According to the current invention, as set out in the appended claims, a significantly smooth interior surface of a pressure sensing area is ensured by fabricating a monolithic array of pressure sensors and combining it with separately micro-fabricated flow channels. The smooth interior surface ensures that the slit flow is less perturbed and the accurate local pressures are measured and the interior surface is less likely damaged by a deposition of test materials. The slit flow channel is constructed in a micrometer scale so that only a miniscule amount of sample is required for viscosity measurement. Additionally, the pressure sensors and flow channels are fabricated on wafers using batch microfabrication processes of Micro-Electro-Mechanical Systems. Such a batch wafer process makes many identical parts at the same time and thereby reduces manufacturing costs of the micro viscometers.

Advances in microfabrication and micromachining processes enable the miniaturization of sensitive solid-state pressure sensors. Such a reduction in size allows in turn the densification of functionalities. Also the technical advances in microfabrication makes tailoring of pressure sensor sensitivity easier along with improvements in read out circuit designs. These improvements allow the tailoring of the micro viscometers to various purposes and for measuring wide ranges of viscosity.

In a preferred embodiment of the invention, the slit viscometer includes a flow cell and a pumping system capable of causing flow in a controlled manner. The flow cell further consists of a microfabricated flow channel with an order of micrometer in depth for flow and monolithic pressure sensor arrays. The depth of the channel or channels is in the order of one micrometer, the length of the channel is longer than one hundred micrometers, and the width is wider than ten micronmeters. The flow channels are fabricated on a wafer in a known batch process. The monolithic pressure sensor arrays are also fabricated on a wafer or wafers. The microfabricated wafer with many flow channels is combined with the microfabricated wafer with many monolithic pressure sensor arrays in a known manner. The combined wafer has many flow cells, which are further diced to separate individual flow cells. In the slit viscometer, a test liquid is pumped to flow from one end of the flow channel to the other end and resulting pressure drop along the flow channel is measured.

A preferred method is to form the flow channel by etching wafers such as silicon (Si), Galum Arsenide (GaAs), borosilicate (Pyrex 7740), or derivatives of these materials in a known manner.

A fabrication method to form pressure sensors is to form a plurality of cavities on a plate so that the smooth measuring surface of the plate extends over the cavities to form an end of the cavity which will deform slightly in response to pressure applied to the smooth surface over the cavity. A single and simple detection mechanism is formed on each cavity to provide a measurement of pressure applied by the liquid under test against the surface over the cavity. The detection mechanism is capacitive, piezo-resistive, or optical.

The primary object of present invention is to provide a micro slit flow viscometer consisting of flow channels combined with monolithic pressure sensor arrays to measure true viscosities with a miniscule amount of sample. Another objective of this invention is that the flow channels and pressure sensors are fabricated on wafers commonly used in microfabrication and they are combined in order to mass produce viscometers in a cost effective manner.

### THE DRAWINGS

The best mode presently contemplated for carrying out the invention is illustrated in the accompanying drawings, in which:
Figure 1 is a top plan view of a micro slit flow cell of the invention;
Figure 2, a vertical section of the flow cell of Figure 1, taken on the line 2-2 of Figure 1;
Figure 3, a vertical section of an alternative channel entrance and exit configuration for a slit flow cell;
Figure 4, a top plan view of a flow channel substrate;
Figure 5, a vertical section of the flow channel substrate of Figure 4, taken on the line 5-5 of Figure 4;
Figure 6, a series of vertical sections showing the process sequence to form cavities on a substrate with SOI wafer;
Figure 7, a top plan view of a monolithic pressure sensor array;
Figure 8, a vertical section of the monolithic pressure sensor array of Figure 7, taken on the line 8-8 of the micro slit flow cell of Figure 7;
Figure 9, an enlarged fragmentary vertical section of an individual pressure sensor showing a cavity and thin membrane section;
Figure 10, a top plan view of a pattern on the pressure sensor substrate for a monolithic pressure sensor array;
Figure 11, a vertical section of the pressure sensor substrate of Figure 10, taken on the line 11-11 of Figure 10;
Figure 12, a top plan view of the pattern on the pressure sensor membrane at the interface with the pressure sensor substrate;
Figure 13, a vertical section of the pressure sensor membrane of Figure 12, taken on the line 13-13 of Figure 12;
Figure 14, a vertical section of an alternative design of monolithic pressure sensor arrays;
Figure 15, a top plan view of a piezoresistor pattern on the silicon membrane for pressure measurement;
Figure 16, a top plan view of a slit rheometer having multi channels positioned side by side;
Figure 17, a block diagram of a slit rheometer system showing parallel flow cells and pumps;
Figure 18, a block diagram of a slit rheometer system having a single pump connected to two flow cells; and
Figure 19, a block diagram of a slit rheometer system for mixing test liquids having two pumps feeding a single flow cell.

### DETAILED DESCRIPTION OF THE ILLUSTRATED EMBODIMENT

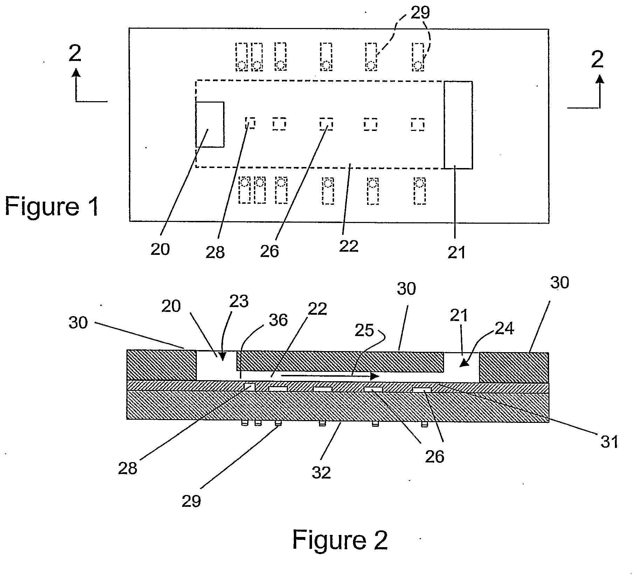

An embodiment of a micro slit flow cell of the invention is shown in Figures 1 and 2 and includes a flow entrance or inlet 20, a flow exit or outlet 21, and a flow channel 22 therebetween. The flow channel 22 has a predetermined uniform depth (gap) in the micrometer range along the channel. The width of the channel is significantly larger than the depth of the channel so that the flow through the channel can be considered to be a one-dimensional problem instead of a two dimensional problem. The ratio of the width to the depth is preferably larger than ten. The preferred depth of the channel is in the order of a micrometer. The preferred length of the channel is at least one hundred micrometers excluding the entrance and exit zones, 23 and 24, respectively. In order to measure the true viscosity of a test liquid, the test liquid is forced to flow through the flow channel 22 of the micro slit flow cell by a pumping system, not shown, at a controllable constant volumetric flow rate. Because of the small volume required by the micro flow cell, a pumping system for small volumes is preferably used. A micro syringe pump is one of several possible pumping system. Micro syringe pumps are readily available and a selected micro syringe pump, not shown, is connected to the inlet 20 of the flow cell in a known manner. A drain or drain system, also not shown, is connected to the exit or outlet 21 in a known manner.

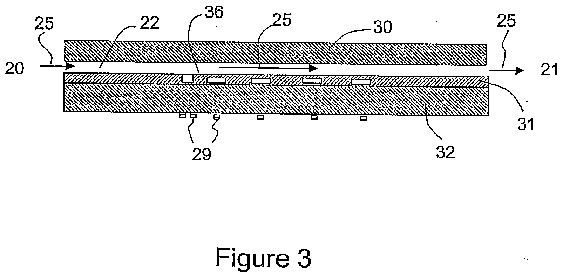

When the test liquid flows in flow channel 22, pressure drops along the flow direction indicated by arrow 25. The pressure drop indicates the steady state shear stress of the test liquid flowing in the flow channel 22 if pressure is measured sufficiently away from the entrance zone 23 and the exit zone 24 so that a constant pressure drop is measured for a fully developed flow. For the pressure drop measurement, pressure sensors are located in pressure sensor cavities 26 positioned at different locations along the flow channel 22 away from the entrance and the exit zones. The pressure sensors measure the pressure of the flowing liquid in the flow channel 22 at the location of the respective cavity 26. Preferably, at least two pressure sensor cavities 26 with associated pressure sensors are positioned along the flow channel 22, four such pressure sensor cavities being shown in Figures 1 and 2. Liquid viscosity is known to be very sensitive to temperature. Therefore it is necessary to maintain a substantially uniform temperature across the flow channel for accurate viscosity measurements. Also the temperature of the liquid being tested needs to be known. It is thus preferred to measure the temperature of the test liquid flowing through the flow channel. For this reason, a temperature sensor cavity 28 is located along the flow channel near the entrance zone. If desired, an additional temperature sensor cavity, not shown in Figures 1 and 2, can be located near the exit zone to monitor the temperature uniformity or provide temperture change information to be used in correcting the viscosity measurements obtained. At the bottom of the flow cell, bond pads 29 are located in a manner so that the necessary electrical connections to the pressure sensors, temperature sensors, and other sensors that may be provided can be made in a simple manner, for example to a micro-controller based PCB (printed circuit board) read out circuit through wire bonding or other surface mounting technology. Flow into the entrance 20 and from the exit 21 can be made to be perpendicular to the flow channel 22 as shown in Figure 2, or parallel to the flow channel 22 as shown in Figure 3, depending on the desired channel and cell configurations and interfaces with the pumping system at the entrance and with the drain system at the exit.

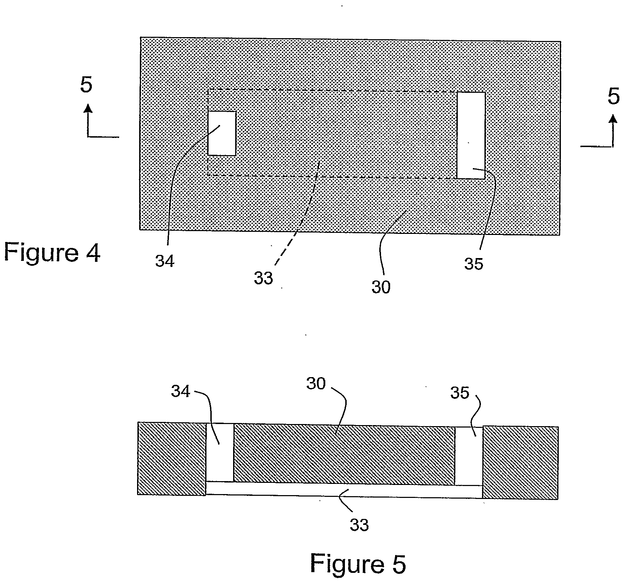

The flow cell includes a flow channel substrate 30 and a sensor plate formed of a sensor membrane 31 and a sensor substrate 32. The flow channel substrate 30 has a cavity 33, Figures 4 and 5, which forms the flow channel 22 when the substrate is combined with the sensor plate, as shown in Figures 2 and 3. The flow channel substrate 30 may also have an inlet hole 34 which forms the channel entrance 20 and an outlet hole 35 which forms the channel exit 21. The sensor membrane 31 forms a monolithic, substantially smooth flow channel pressure sensing surface 36 along one side of the flow channel 22, shown as the bottom channel surface in the orientation of Figures 2 and 3. The pressure sensors and temperature sensors are preferably integrated into the sensor plate so a monolithically integrated array of pressure sensors with one or more temperature sensors is formed. The monolithic pressure sensing surface 36 provides a sufficiently smooth flow channel pressure sensing surface to provide more accurate pressure measurements and potentially longer service than if the pressure sensors were individually and separately placed on or in the pressure sensing surface.

The flow channel substrate 30 has a cavity 33 with well defined pre-determined depth as shown in Figure 4 and 5. In this cavity 33, the width is much bigger than the depth. The cavity can be formed by etching the substrate after photo-resist on the substrate is patterned using the known photolithography processes of micro-fabrication processes. The etching method can be wet chemical etching or plasma dry etching. These etching processes are made on a wafer level so that many cavities can be formed simultaneously. For the wafer, borosilicate glasses (Pyrex 7740), Silicon, GaAs, or other materials used in microfabrication processes can be used. Etching of these wafers can be done in a known manner. If Pyrex is used for the substrate 30, the Pyrex is etched with buffered hydro fluoric acid solution or Buffered Oxide Etcher (BOE) to form the cavity 33. The inlet or entrance hole 34 and the outlet or exit hole 35 can be made by ultrasonic cutting, other mechanical machining, or by etching.

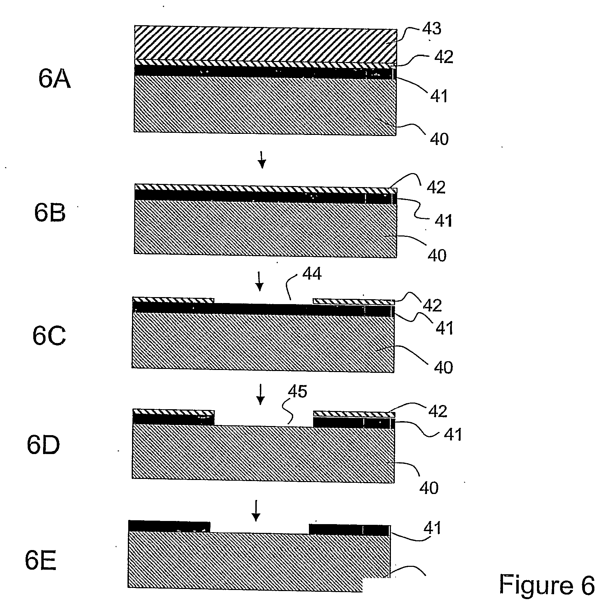

Figure 6 shows an alternate method for forming the flow cavity 33 in the flow channel substrate 30. First a Pyrex wafer 40 with holes, not shown, for the entrance and exit is bonded to the device silicon 41 of an SOI (silicon-on-insulator) wafer, which consists of device silicon 41, buried oxide 42, and handle silicon 43, using conventional nomenclature. This is shown in 6A. Then the handle silicon 43 is etched away to give the wafer formation of 6B. The exposed oxide layer 42 is patterned as at 44, 6C, for subsequent etching of the device silicon layer 41 to form a cavity 45, 6D. Then the oxide layer is removed to give the flow channel substrate of 6E. Alternatively, the cavity can be formed on a silicon wafer by first oxidizing the silicon. The oxide is patterned to form etch masks. Then the exposed silicon is etched to form cavities in a known manner. The remaining oxide is removed subsequently.

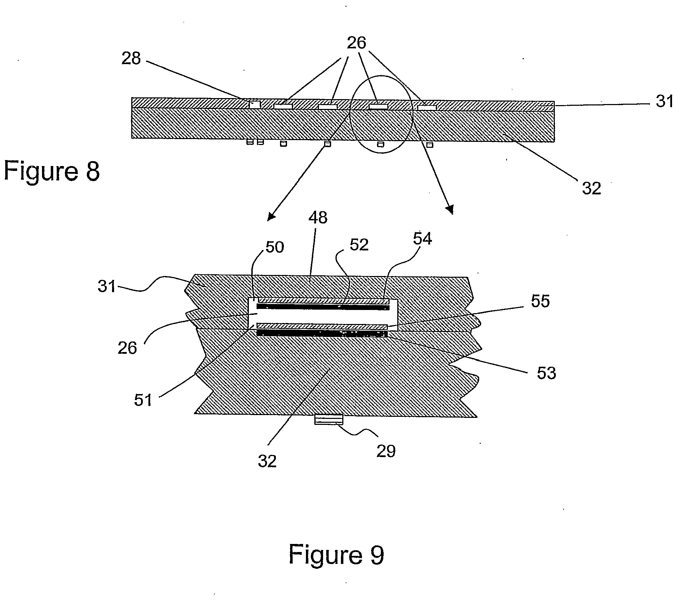

The sensor plate consists of pressure sensor membrane 31 and a pressure sensor substrate 32. At the interface between the membrane 31 and the substrate 32, there are cavities for pressure sensing and for temperature sensing. The cavities can be formed in the back or underside of the pressure sensor membrane, in the pressure sensor substrate, or in both. The portion of the membrane which extends over each cavity deflects as pressure is applied to the pressure sensing surface 36 over the cavity and the amount of deflection of the membrane into the cavity is measured to provide an indication of the pressure applied to the pressure sensing surface over the cavity. Figures 2,3, 8, and 9 show pressure sensor cavities 26 and temperature sensor cavities 28 formed in the back or underside of the pressure sensor membrane 31. The deflection of the portion of the pressure sensor membrane that extends over a cavity, indicated as 48 in Figure 9, can be measured by a capacitance change, resistance change, optical path change, or other type pressure sensor, as desired.

Figure 9 shows a capacitacnce pressure sensor which measures a capacitance change as the portion of the membrane 48 over the pressure sensor cavity 26 deforms under different pressures applied by a test liquid flowing over membrane portion 48. In this embodiment, cavity 26 has two sides, 50 and 51, and each side 50 and 51 has an electrode 52 and 53, respectively, mounted thereto. An insulating layer 54 separates upper electrode 52 from the pressure sensor membrane material, while lower electrode 53 is mounted directly to the pressure sensor substrate. Insulating material 55 is provided on the upper face of capacitor lower electrode 53 to prevent shorting of the electrodes under pressure that would deform the membrane portion 48 enough to cause electrode 52 to otherwise contact electrode 53. The capacitance of the two electrodes depends upon the separation of the electrodes and changes as the gap or distance between the electrodes change as the membrane portion 48 over the cavity deflects under pressure.

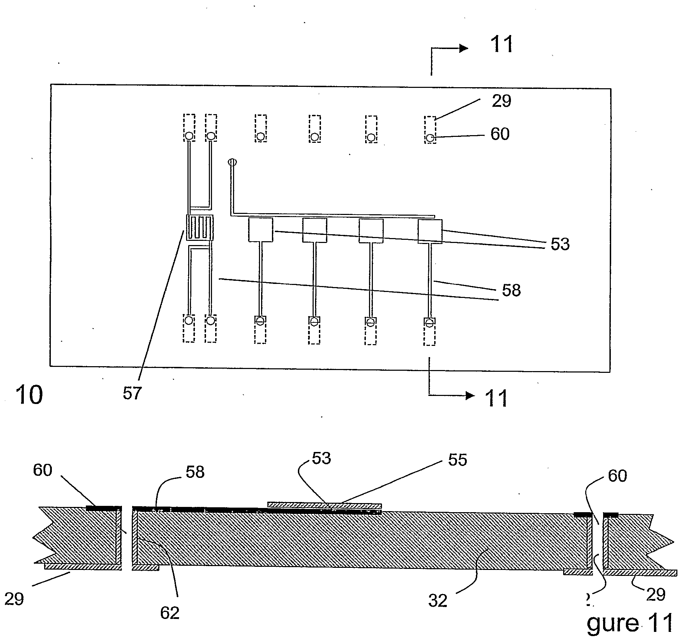

The sensor plate is fabricated on a wafer using micro-fabrication processes. The pressure sensor substrate 32 can be prepared by processing a Pyrex wafer as shown in Figures 10 and 11. Chrome or Titanium, and Platinum are deposited in sequence and are patterned to form temperature sensors 57 on the surface of the Pyrex. Bottom capacitor electrodes 53 and electrical leads 58 are formed by depositing metal on patterned resist on the Pyrex. The resist is lifted off to leave patterned metals. If desired, the Pyrex can be etched slightly before depositing metals using the patterned resist as etch mask so that most of the metals deposited are embedded in the Pyrex. Oxide is then deposited over the capacitor electrodes to form insulating material 55. The Pyrex can be ultrasonically machined to form vias 60.

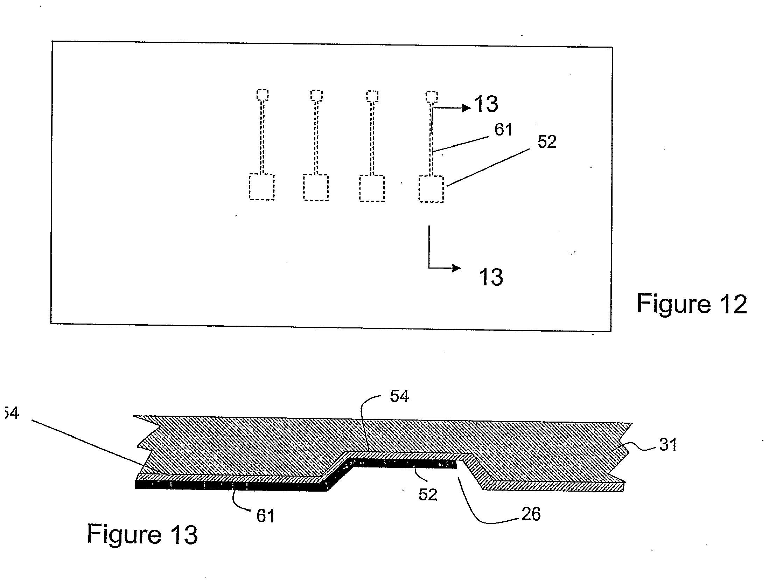

The pressure sensor membrane can be made using an SOI wafer, for example. As indicated in connection with Figure 6, and referring to Figure 6, an SOI (silicon-on-insulator) wafer consists of device silicon 41, buried oxide 42, and handle silicon 43. The SOI wafer does not include the pyrex 40 shown in Figure 6A. In using an SOI wafer for fabricating the sensor membrane, the device silicon, which becomes the pressure sensor membrane material 31, is etched to form the desired pressure sensor cavities 26 and temperature sensor cavities 28 on the underside of the membrane using patterned oxide as an etch mask. The oxide is then removed and a fresh oxide layer to form insulating material 54 is grown on the device silicon. Metal is then deposited on patterned resist on the oxide layer over the device silicon of the SOI. The resist is removed to form the capacitor upper electrodes 52 and to form electrical leads 61, Figure 13, separated from the device silicon 31 by the insuling oxide layer 54.

The processed SOI wafer for forming the pressure sensor membrane is then bonded to the processed Pyrex wafer forming the pressure sensor substrate. Metal is then deposited using an aperture mask on the bottom of the pyrex pressure sensor substrate to form the bond pads 29, Figure 11, and electrical connectivity 62 along vias 60 to connect with leads 58. Then remove The handle silicon and buried oxide layer of the SOI wafer forming the membrane is then removed in sequence to finish formation of the pressure sensor plate.

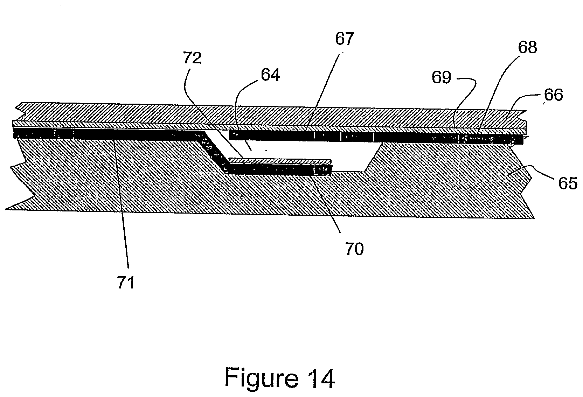

Figure 14 shows a pressure sensor cavity 64 formed in the pressure sensor substrate 65 rather than in the pressure sensor membrane 66. A capacitor upper electrode 67 and electrical lead 68, and an insulating layer 69, are formed on the flat bottom surface (no wells) of the pressure sensor membrane 66. Capacitor lower electrode 70 and electrical lead 71 are formed in the well 64 and on the surface of the pressure sensor substrate 65. Insulating material 72 is deposited on capacitor lower electrode 70. This forms a pressure sensor plate similar to that described for prior figures, and operates similarly to detect and measure the deflection of membrane 66 into cavity 64. The difference is that the pressure sensor cavity is formed in the pressure sensor substrate rather than in the pressure sensor membrane, and the pressure sensor membrane will be of a uniform thinner thickness. The temperature sensor cavities in this embodiment will similarly be formed in the substrate rather than in the membrane.

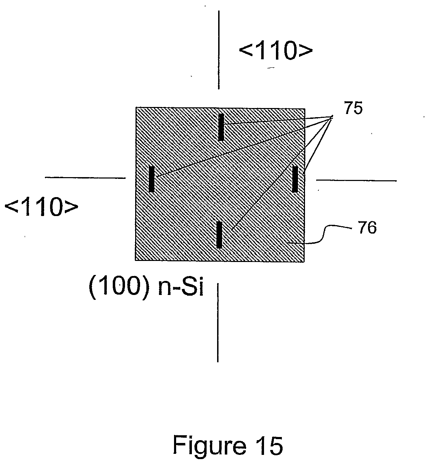

If piezoresistivity is employed for pressure measurement, the semi-conductor membrane (membrane portion 48 in Figure 9 and membrane 66 in Figure 14) is properly doped in a known manner to form resistors 75, Figure 15, where the membrane is indicated as 76. The resistance changes of the doped resistors 75 on the membrane 76 as the membrane is deflected into a cavity, are measured in a known manner. As the membrane deflects due to pressure, resistances of the doped regions change and the changes are measured in, for example, a Wheatstone-bridge configuration of the resistors. For example, p-type piezoresistors are formed along the <110> directions on an n-type (100) silicon wafer 76 as shown in Figure 15. These conventional piezo-resistive silicon sensors are not suitable for high temperature applications above 120 °C. With temperatures above 120 °C, the p-n junctions leaks current. In order to prevent the current leakage and increase the service temperature for these conventional piezo-resistive silicon sensors, the p-n junctions can be isolated by putting insulators between the p-n junctions or using a SOI (silicon-on-insulator) in a known manner. Alternately, wide band gap materials such as GaAs or SiC can be used for the membrane materials.

After fabrication of the pressure sensor plate and the flow channel substrate as descrived above, the combined wafers forming the pressure sensor plate and the wafer forming the flow channel substrate are then joined and bonded together in a known manner depending on the chosen material combinations for the pressure sensor plate and the flow channel substrate to form a wafer with completed micro flow cells as shown in Figures 1, 2, and 3. The bonding method could be glass-frit, thermal compression, eutectic bonding, anodic bonding, or other methods. Using micro-fabrication processes, such as those described as examples, many flow cells can be made on a single combined wafer, and many such wafers can be made in a batch, all in a very cost effective manner. Since many flow cells can be made on each wafer, the combined wafer forming the completed flow cells can be diced to separate the flow cells into individual flow cells or into pieces containing a desired number of individual flow cells.

Alternatively, a wafer with flow channel substrates is bonded first with the SOI wafer. Then the handle Si and oxide are sequentially removed. The exposed device Si wafer is processed to form a plurality of sensor membranes. A Pyrex 7740 wafer with plurality of pressure sensor substrates is separately processed. Then the two wafers are combined preferably with an anodic bonding process. The bonded wafers are then diced for individual viscosity sensors after vias are processed appropriately.

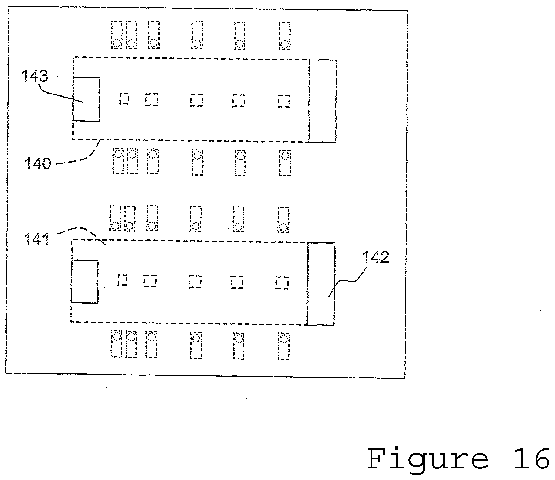

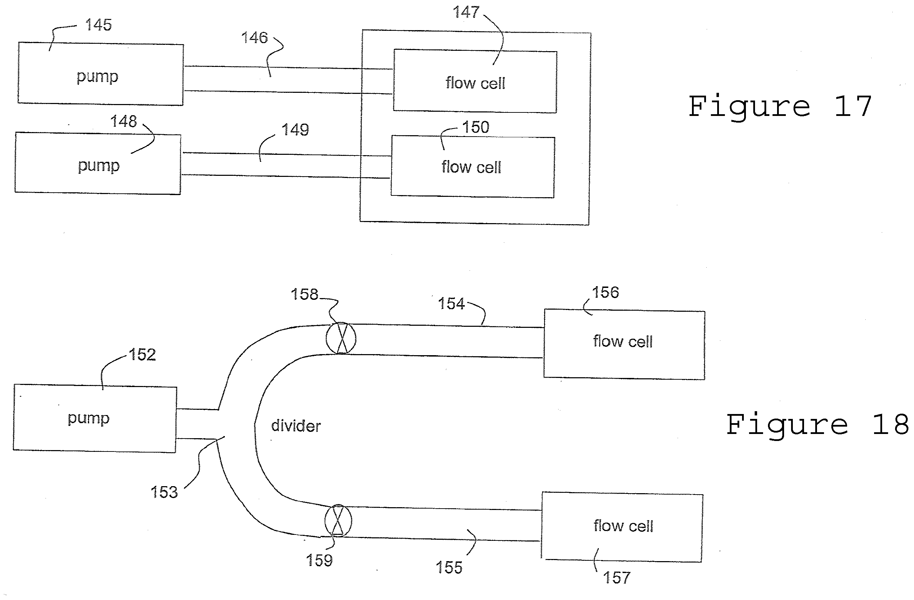

For true viscosity measurement each flow cell may have two or more flow channels in parallel as shown in Figure 16. Figure 16 shows two parallel flow cells 140 and 141. Such flow cells can be formed by dicing the wafer containing the flow cells so that a diced piece includes two or more parallel cells. Where two or more flow cells are used, separate pumps may be used for each different cell. This is shown schematically in Figure 17. Pump 145 pumps test liquid through conduit 146 to cell 147. Pump 148 pumps test liquid through conduit 149 to cell 150. If the channels of the cells are the same size and the same test fluid is used in each cell, true viscosity can be measures by running pump 145 to pump fluid at one rate through flow cell 147 and running pump 148 to pump the fluid at a different rate through cell 150. The pressure measurement obtained from each cell are compared to obtain and correlated with the flow rate to obtain the true viscosity. Of course, if using only one pump and one flow cell, if the flow rate of the pump can be adjusted, a test liquid can be run through the cell with the pump operating at one flow rate and then the flow rate can be changed and pressure measurements taken for the same test liquid being pumped through the cell at the different flow rate. If one pump is used, then a valve or valves can be used to direct flow to one or another cell. This is shown in Figure 18. Pump 152 is connected through divider 153 and conduits 154 and 155 to cells 156 and 157 respectively. Valve 158 in conduit 154 controls flow to cell 156, while valve 159 in conduit 155 controls flow to cell 157. True viscousity can be measured by running the pump at constant flow rate and switching between flow cells if the flow channels of the flow cells are of different size. With the same size flow channels in the cell, true viscosity can be measured if the valves 158 and 159 are replaced by flow controllers so that flow from the pump will simultaneously flow at controlled known rates through both cells 156 and 157. Alternately, parallel flow cells can be connected appropriately with flow channels or conduits, or other connections, to form channels connected in series. Thus, the outlet 142 of channel 141 may be connected to the inlet 143 of channel 140 in Figure 16. Such series connected channels may have different channel sizes so that, in effect, a series channel of different sizes or flow volumes is created.

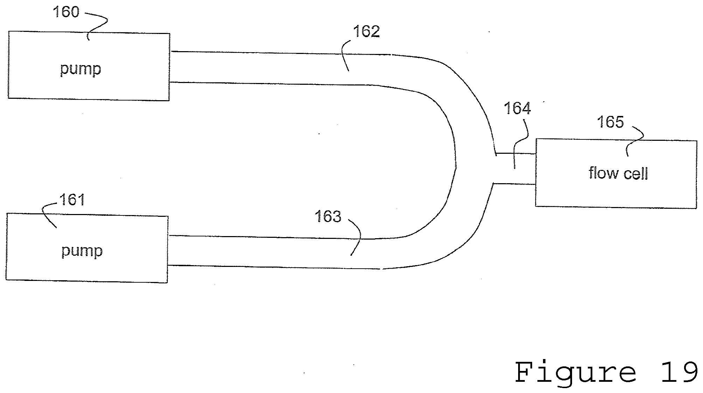

In some cases it is desirable to measure the viscosity of a mixture of liquids. In such case, separate pumps can be provided for each liquid to be mixed, such as pumps 160 and 161 in Figure 19, with the output conduits 162 and 163 from each pump being joined so that the liquids from each pump mix in conduit 164 directing the mixed liquids to cell 165. The ratio of the mixed components is controled by controlling the relative pumping rate of the two pumps 160 and 161.

It should be remembered that in measuring viscosity, a constant flow rate through the channel is important. Therefore, the various flow conduits described connecting pumps to flow channels or connecting multiple flow channels should be rigid enough to prevent stretching and bulging that could cause liquid flow through the channels to vary.

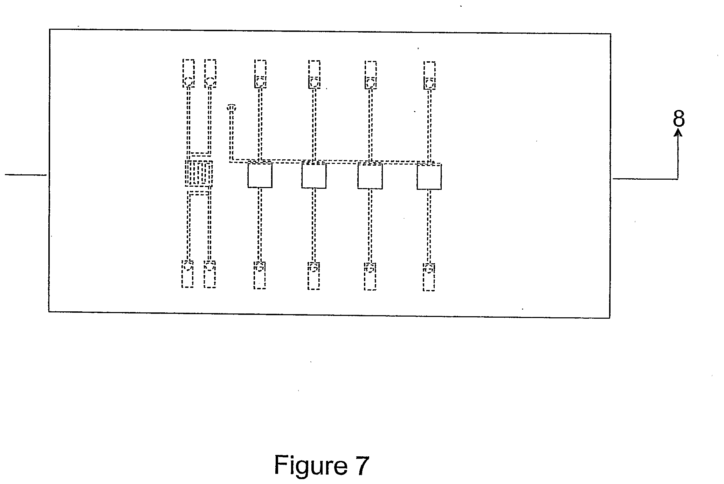

Inventions described in Figures 1, 7, 10, and 15 have bond pads located at the bottom of the pressure sensor substrate so that the bond pads are connected to the detection circuitries. However, this bond pad configuration may not be desirable for certain applications. Instead, the bond pads may be positioned on the top of the pressure sensor substrates beyond flow channels so that they are exposed. The exposed pads are wire bonded further to the detection circuitry. To make this bond pad configuration, the conductor leads fabricated on the pressure sensor membrane should be properly transferred to bond pads on the top of the pressure sensor substrate.

This viscosity sensor can be further integrated with a flow rate sensor. The flow sensor measures the flow rate of liquid and the viscosity sensor measures a pressure drop along the flow channel. With the known flow rate and the pressure drop, apparent viscosity can be measured. In order to measure the true viscosity, pressure drops need to be measured for different flow rates. This can be achieved by connecting flow channels with different gaps or by varying flow rates. As the liquid flows through the flow channels, flow rates vary in each channel because of the change in cross-section. The variation in flow rate changes the pressure drop in each channel. From the measured pressure drop for each channel, a true viscosity can be obtained. The flow rate sensors that can be used along with the viscosity sensor are hot wire flow rate sensor, acoustic wave flow rate sensor, coriolis flow rate sensor, etc. These sensors are constructed and integrated in a known manner.

## Claims

1. A slit rheometer for determining the viscosities of liquids comprising: a monolithic sensor plate formed from a combination of a pressure sensor membrane (31) and a pressure sensor substrate (32) having at least two cavities (26) formed in the back or underside of the pressure sensor membrane (31), in the pressure sensor substrate (32) or both, wherein a portion of the pressure sensor membrane (31) extending over respective cavities (26) of the at least two cavities will deflect into the respective cavities (26) upon application of pressure to the portion of the pressure sensor membrane (31) over a respective cavity, thereby forming pressure sensors, the amount of deflection providing an indication of the pressure applied to the pressure sensing surface over the cavity (26); a channel substrate (30) configured to form a single liquid flow channel (22) therein of uniform width, uniform length, and uniform depth between a liquid flow channel entrance (23) and a liquid flow channel exit (24) when combined with the monolithic sensor plate, wherein the pressure sensor membrane (31) forms a monolithic, substantially smooth flow channel pressure sensing surface (36) along one side of the flow channel (22); the width of the flow channel (22) being at least about ten times larger than the depth of the flow channel and the depth being on the order of a micrometer; and wherein the at least two pressure sensors located in the respective cavities (26) are sufficiently spaced away from the liquid flow channel entrance and the liquid flow channel exit such that a pressure drop of fully developed flow of liquid through the flow channel can be measured.

2. A slit rheometer according to claim 1, additionally including means to cause flow of liquid to be tested through the liquid flow channel.

3. A slit rheometer according to claim 2, wherein the means to cause a flow through the liquid flow channel is a pump (145, 148, 152, 160, 161) and wherein during flow of liquid the pressure exerted by the liquid at the locations of the pressure sensors is measured by each sensor and from such measurements the apparent viscosity and true viscosity may be determined.

4. A slit rheometer according to claim 3, wherein the flow rate of the pump (145, 148, 152, 160, 161) is adjustable.

5. A slit rheometer according to claim 1, wherein the sensor plate has at least one temperature sensor (28) for the flow channel located to measure the temperture of the liquid flowing through the flow channel.

6. A method of measuring the viscositiy of a liquid, comprising:
(a) obtaining a slit rheometer according to Claim 4;
(b) adjusting the pump to run a test liquid through the liquid flow channel with the the pump operating at one flow rate and taking pressure measurements with the pressure sensors;
(c) changing the flow rate of the pump, running the test liquid through the slit rheometer with a different flow rate and taking pressure measurements with the pressure sensors; and
(d) determining the true viscosity of the liquid from the pressure measurements at the known flow rates.

7. A method of measuring the viscositiy of a liquid, comprising:
(a) obtaining a first and a second slit rheometer according to Claim 4,
(b) running the pump of the first rheometer to pump fluid at one rate through the flow channel of the first rheometer and measuring the pressure applied to the pressure sensors of the first rheometer;
(c) running the pump of the second rheometer to pump fluid at a different rate through the flow channel of the second rheometer and measuring the pressure applied to the pressure sensors of the second rheometer; and
(d) obtaining the true viscosity of the liquid by comparing and correlating with the flow rates.

8. A method of measuring the viscositiy of a liquid, comprising:
(a) obtaining a first and a second slit rheometer according to Claim 2, said first and second slit rheometers having flow channels formed by differently dimensioned recesses;
(b) running liquid through the flow channel of the first rheometer and the second rheometer and measuring the difference in pressure sensed by two pressure sensors in a particular dimensioned recess; and
(c) comparing the measurements in differently dimensioned recesses to determine the true viscosity of the liquid.

9. A method of measuring the viscositiy of a liquid according to Claim 8, wherein the first known flow rate and the second known flow rate are the same.

10. A method of measuring the viscositiy of a liquid according to Claim 8, wherein the first known flow rate and the second known flow rate are different.

11. A method of manufacturing slit rheometers according to any of claims 1 to 5 comprising:
(a) forming a plurality of channel cavities (33) in a channel substrate (30), each channel cavity (33) having uniform width, uniform length, and uniform depth and a length opening along a joining surface of the channel substrate;
(b) forming a plurality of cavities (26) in one or both of a pressure sensor membrane (31) and a pressure sensor substrate (32), the number of cavities (26) making up the plurality of cavities being at least double the number of channel cavities (33) formed in the channel substrate (30);
(c) combining the pressure sensor membrane (31) with the pressure sensor substrate (32) to create a pressure sensor plate with a portion (48) of the pressure sensor membrane (31) extending over respective cavities (26) of the plurality of cavities;
(d) thereby forming pressure sensors in the plurality of cavities (26);
(e) combining the pressure sensor plate with the channel substrate (30) along the joining surface of the channel substrate (30) to close the plurality of channel cavities (33) along the joining surface of the channel substrate (30) to create a plurality of flow channels (22) each having a flow entrance (20) and a flow exit (21) through which liquid can flow, each flow channel (22) passing over at least two of the plurality of pressure sensors in the pressure sensor plate with the at least two pressure sensors spaced along the length of each flow channel (22) sufficiently away from the liquid entrance (23) and the liquid exit (24) whereby a pressure drop of fully developed flow of liquid through each of the flow channels (22) can be measured; and
(f) separating the respective flow channels of the plurality of flow channels into a plurality of individual flow channels comprising a plurality of individual slit rheometers.

12. A method of manufacturing slit rheometers according to Claim 11, wherein each channel cavity (33) has opposite ends and the flow entrance (23) extends through the channel substrate to one end of the channel cavity and the flow exit (24) extends through the channel substrate to the opposite end of the channel cavity.

13. A method of manufacturing slit rheometers according to Claim 12, wherein each of the plurality of channel cavities (33) includes three channel walls and wherein the monolithic sensor plate froms a fourth wall for each of the plurality of channel cavities when the monolithic sensor plate is combined with the channel substrate (30) to form the plurality of flow channels (22).

## Patentansprüche

1. Spaltrheometer zur Bestimmung der Viskositäten von Flüssigkeiten, umfassend: eine monolithische Sensorplatte aus einer Kombination aus einer Drucksensormembran (31) und einem Drucksensorsubstrat (32) mit mindestens zwei Hohlräumen (26), die in der Rück- oder Unterseite der Drucksensormembran (32), in dem Drucksensorsubstrat (32) oder in beiden ausgebildet sind, wobei sich ein Teil der Drucksensormembran (31), der sich über entsprechende Hohlräume (26) der mindestens zwei Hohlräume erstreckt, in die entsprechenden Hohlräume (26) auslenkt, wenn ein Druck auf den Teil der Drucksensormembran (31) über einem entsprechenden Hohlraum ausgeübt wird, wodurch Drucksensoren ausgebildet werden, wobei das Ausmaß der Auslenkung eine Anzeige des Drucks liefert, der auf die Drucksensorfläche über dem Hohlraum (26) ausgeübt wird; ein Kanalsubstrat (30), das so konfiguriert ist, dass es einen einzelnen Flüssigkeitsströmungskanal (22) mit gleichmäßiger Breite, gleichmäßiger Länge und gleichmäßiger Tiefe zwischen einem Flüssigkeitsströmungskanaleingang (23) und einem Flüssigkeitsströmungskanalausgang (24) bildet, wenn es mit der monolithischen Sensorplatte kombiniert ist, wobei die Drucksensormembran (31) eine monolithische, im Wesentlichen glatte Strömungskanaldruckmessfläche (36) entlang einer Seite des Strömungskanals (22) bildet; wobei die Breite des Strömungskanals (22) mindestens etwa zehnmal größer ist als die Tiefe des Strömungskanals und die Tiefe in der Größenordnung eines Mikrometers liegt; und wobei die mindestens zwei Drucksensoren, die in den jeweiligen Hohlräumen (26) angeordnet sind, ausreichend vom Eingang des Flüssigkeitsströmungskanals und vom Ausgang des Flüssigkeitsströmungskanals beabstandet sind, so dass ein Druckabfall der voll entwickelten Strömung der Flüssigkeit durch den Strömungskanal gemessen werden kann.

2. Spaltrheometer nach Anspruch 1, das zusätzlich eine Einrichtung aufweist, die eine Strömung einer zu prüfenden Flüssigkeit durch den Flüssigkeitsströmungskanal bewirkt.

3. Spaltrheometer nach Anspruch 2, wobei das Mittel zum Erzeugen einer Strömung durch den Flüssigkeitsströmungskanal eine Pumpe (145, 148, 152, 160, 161) ist und wobei während der Flüssigkeitsströmung der von der Flüssigkeit an den Stellen der Drucksensoren ausgeübte Druck von jedem Sensor gemessen wird und aus solchen Messungen die scheinbare Viskosität und die wahre Viskosität bestimmt werden können.

4. Spaltrheometer nach Anspruch 3, wobei die Durchflussmenge der Pumpe (145, 148, 152, 160, 161) einstellbar ist.

5. Spaltrheometer nach Anspruch 1, wobei die Sensorplatte mindestens einen Temperatursensor (28) für den Strömungskanal aufweist, der zur Messung der Temperatur der durch den Strömungskanal fließenden Flüssigkeit angeordnet ist.

6. Verfahren zur Messung der Viskosität einer Flüssigkeit, umfassend:
(a) Erhalten eines Spaltrheometers nach Anspruch 4;
(b) Einstellen der Pumpe, um eine Testflüssigkeit durch den Flüssigkeitsströmungskanal zu leiten, wobei die Pumpe mit einer Durchflussrate arbeitet und Druckmessungen mit den Drucksensoren vorgenommen werden;
(c) Ändern der Durchflussrate der Pumpe, Durchleiten der Testflüssigkeit durch das Spaltrheometer mit einer anderen Durchflussrate und Durchführen von Druckmessungen mit den Drucksensoren; und
(d) Bestimmen der tatsächlichen Viskosität der Flüssigkeit aus den Druckmessungen bei den bekannten Durchflussraten.

7. Verfahren zum Messen der Viskosität einer Flüssigkeit, umfassend:
(a) Bereitstellen eines ersten und eines zweiten Spaltrheometers nach Anspruch 4,
(b) Betreiben der Pumpe des ersten Rheometers, um Flüssigkeit mit einer Rate durch den Strömungskanal des ersten Rheometers zu pumpen, und Messen des an den Drucksensoren des ersten Rheometers anliegenden Drucks;
(c) Betreiben der Pumpe des zweiten Rheometers, um Fluid mit einer anderen Rate durch den Strömungskanal des zweiten Rheometers zu pumpen, und Messen des an den Drucksensoren des zweiten Rheometers anliegenden Drucks; und
(d) Ermitteln der tatsächlichen Viskosität der Flüssigkeit durch Vergleichen und Korrelieren mit den Durchflussraten.

8. Verfahren zum Messen der Viskosität einer Flüssigkeit, umfassend:
(a) Bereitstellen eines ersten und eines zweiten Spaltrheometers nach Anspruch 2, wobei das erste und das zweite Spaltrheometer Strömungskanäle aufweisen, die durch unterschiedlich dimensionierte Ausnehmungen gebildet werden;
(b) Durchleiten von Flüssigkeit durch die Strömungskanäle des ersten Rheometers und des zweiten Rheometers und Messen der Druckdifferenz, die von zwei Drucksensoren in einer besonders dimensionierten Ausnehmung erfasst wird; und
(c) Vergleichen der Messungen in unterschiedlich dimensionierten Vertiefungen zur Bestimmung der tatsächlichen Viskosität der Flüssigkeit.

9. Verfahren zur Messung der Viskosität einer Flüssigkeit nach Anspruch 8, wobei die erste bekannte Durchflussrate und die zweite bekannte Durchflussrate gleich sind.

10. Verfahren zur Messung der Viskosität einer Flüssigkeit nach Anspruch 8, wobei die erste bekannte Durchflussrate und die zweite bekannte Durchflussrate unterschiedlich sind.

11. Verfahren zur Herstellung von Spaltrheometern nach einem der Ansprüche 1 bis 5, umfassend:
(a) Ausbilden einer Vielzahl von Kanalhohlräumen (33) in einem Kanalsubstrat (30), wobei jeder Kanalhohlraum (33) eine gleichmäßige Breite, eine gleichmäßige Länge und eine gleichmäßige Tiefe sowie eine Längsöffnung entlang einer Verbindungsfläche des Kanalsubstrats aufweist;
(b) Bilden einer Vielzahl von Hohlräumen (26) in einer Drucksensormembran (31) und/oder einem Drucksensorsubstrat (32), wobei die Anzahl der Hohlräume (26), die die Vielzahl von Hohlräumen bilden, mindestens doppelt so groß ist wie die Anzahl der in dem Kanalsubstrat (30) gebildeten Kanalhohlräume (33);
(c) Kombinieren der Drucksensormembran (31) mit dem Drucksensorsubstrat (32), um eine Drucksensorplatte zu schaffen, wobei sich ein Teil (48) der Drucksensormembran (31) über entsprechende Hohlräume (26) der Vielzahl von Hohlräumen erstreckt;
(d) dadurch Bilden von Drucksensoren in der Vielzahl von Hohlräumen (26);
(e) Kombinieren der Drucksensorplatte mit dem Kanalsubstrat (30) entlang der Verbindungsfläche des Kanalsubstrats (30), um die Vielzahl von Kanalhohlräumen (33) entlang der Verbindungsfläche des Kanalsubstrats (30) zu schließen, um eine Vielzahl von Strömungskanälen (22) zu erzeugen, die jeweils einen Strömungseingang (20) und einen Strömungsausgang (21) haben, durch die Flüssigkeit fließen kann, wobei jeder Strömungskanal (22) über mindestens zwei der mehreren Drucksensoren in der Drucksensorplatte verläuft, wobei die mindestens zwei Drucksensoren entlang der Länge jedes Strömungskanals (22) ausreichend weit vom Flüssigkeitseintritt (23) und vom Flüssigkeitsaustritt (24) beabstandet sind, wodurch ein Druckabfall der voll entwickelten Flüssigkeitsströmung durch jeden der Strömungskanäle (22) gemessen werden kann; und
(f) Trennen der jeweiligen Strömungskanäle der Vielzahl von Strömungskanälen in eine Vielzahl von einzelnen Strömungskanälen, die eine Vielzahl von einzelnen Spaltrheometern umfassen.

12. Verfahren zur Herstellung von Spaltrheometern nach Anspruch 11, wobei jeder Kanalhohlraum (33) entgegengesetzte Enden hat und der Strömungseingang (23) sich durch das Kanalsubstrat zu einem Ende des Kanalhohlraums erstreckt und der Strömungsausgang (24) sich durch das Kanalsubstrat zu dem entgegengesetzten Ende des Kanalhohlraums erstreckt.

13. Verfahren zur Herstellung von Spaltrheometern nach Anspruch 12, wobei jeder der mehreren Kanalhohlräume (33) drei Kanalwände aufweist und wobei die monolithische Sensorplatte eine vierte Wand für jeden der mehreren Kanalhohlräume bildet, wenn die monolithische Sensorplatte mit dem Kanalsubstrat (30) kombiniert wird, um die mehreren Strömungskanäle (22) zu bilden.

## Revendications

1. Rhéomètre à fente(s) pour déterminer les viscosités de liquides, comprenant : une plaque de capteur(s) monolithique(s) qui est formée à partir d'une combinaison d'une membrane de capteur(s) de pression (31) et d'un substrat de capteur(s) de pression (32), laquelle combinaison comporte au moins deux cavités (26) qui sont formées à l'intérieur de la face arrière ou de la face inférieure de la membrane de capteur(s) de pression (31), à l'intérieur de la face arrière ou de la face inférieure du substrat de capteur(s) de pression (32) ou à la fois à l'intérieur de la face arrière ou de la face inférieure de la membrane de capteur(s) de pression (31) et à l'intérieur de la face arrière ou de la face inférieure du substrat de capteur(s) de pression (32), dans lequel une partie de la membrane de capteur(s) de pression (31) qui est étendue au-dessus de cavités respectives (26) des au moins deux cavités sera fléchie à l'intérieur des cavités respectives (26) suite à l'application d'une pression sur la partie de la membrane de capteur(s) de pression (31) au-dessus d'une cavité respective, d'où ainsi la formation de capteurs de pression, la valeur de fléchissement fournissant une indication de la pression qui est appliquée sur la surface de détection de pression au-dessus de la cavité (26) ; un substrat de canal (30) qui est configuré de telle sorte qu'il forme un unique canal d'écoulement de liquide (22) à l'intérieur de lui-même, lequel canal d'écoulement de liquide présente une largeur uniforme, une longueur uniforme et une profondeur uniforme entre une entrée de canal d'écoulement de liquide (23) et une sortie de canal d'écoulement de liquide (24) suite à sa combinaison avec la plaque de capteur(s) monolithique(s), dans lequel la membrane de capteur(s) de pression (31) forme une surface de détection de pression de canal d'écoulement de liquide sensiblement lisse monolithique (36) le long d'un côté du canal d'écoulement de liquide (22) ; la largeur du canal d'écoulement de liquide (22) étant au moins environ dix fois plus grande que la profondeur du canal d'écoulement de liquide et sa profondeur étant de l'ordre d'un micromètre ; et dans lequel les au moins deux capteurs de pression qui sont localisés à l'intérieur des cavités respectives (26) sont suffisamment espacés de l'entrée de canal d'écoulement de liquide et de la sortie de canal d'écoulement de liquide de telle sorte qu'une chute de pression de l'écoulement de liquide pleinement développé au travers du canal d'écoulement de liquide puisse être mesurée.

2. Rhéomètre à fente(s) selon la revendication 1, incluant de façon additionnelle un moyen pour provoquer un écoulement de liquide destiné à être testé au travers du canal d'écoulement de liquide.

3. Rhéomètre à fente(s) selon la revendication 2, dans lequel le moyen pour provoquer un écoulement de liquide au travers du canal d'écoulement de liquide est une pompe (145, 148, 152, 160, 161) et dans lequel, pendant l'écoulement du liquide, la pression qui est exercée par le liquide au niveau des localisations des capteurs de pression est mesurée par chaque capteur et à partir de ces mesures, la viscosité apparente et la viscosité réelle peuvent être déterminées.

4. Rhéomètre à fente(s) selon la revendication 3, dans lequel le débit d'écoulement de la pompe (145, 148, 152, 160, 161) est réglable.

5. Rhéomètre à fente(s) selon la revendication 1, dans lequel la plaque de capteur(s) monolithique(s) comporte au moins un capteur de température (28) pour le canal d'écoulement de liquide, lequel capteur de température est localisé pour mesurer la température du liquide qui s'écoule au travers du canal d'écoulement de liquide.

6. Procédé de mesure de la viscosité d'un liquide, comprenant :
(a) l'obtention d'un rhéomètre à fente(s) selon la revendication 4 ;
(b) le réglage de la pompe pour faire circuler un liquide de test au travers du canal d'écoulement de liquide, la pompe fonctionnant à un débit d'écoulement donné, et la prise de mesures de pression à l'aide des capteurs de pression ;
(c) la modification du débit d'écoulement de la pompe, le liquide de test circulant au travers du rhéomètre à fente(s) selon un débit d'écoulement différent, et la prise de mesures de pression à l'aide des capteurs de pression ; et
(d) la détermination de la viscosité réelle du liquide à partir des mesures de pression aux débits d'écoulement connus.

7. Procédé de mesure de la viscosité d'un liquide, comprenant :
(a) l'obtention de premier et second rhéomètres à fente(s) selon la revendication 4 ;
(b) la mise en fonctionnement de la pompe du premier rhéomètre à fente(s) de telle sorte qu'elle pompe le fluide à un débit donné au travers du canal d'écoulement de liquide du premier rhéomètre à fente(s) et la mesure de la pression qui est appliquée sur les capteurs de pression du premier rhéomètre à fente(s) ;
(c) la mise en fonctionnement de la pompe du second rhéomètre à fente(s) de telle sorte qu'elle pompe le fluide à un débit différent au travers du canal d'écoulement de liquide du second rhéomètre à fente(s) et la mesure de la pression qui est appliquée sur les capteurs de pression du second rhéomètre à fente(s) ; et
(d) l'obtention de la viscosité réelle du liquide au moyen d'une comparaison et d'une corrélation avec les débits d'écoulement.

8. Procédé de mesure de la viscosité d'un liquide, comprenant :
(a) l'obtention de premier et second rhéomètres à fente(s) selon la revendication 2, lesdits premier et second rhéomètres à fente(s) comportant des canaux d'écoulement de liquide qui sont formés par des évidements dimensionnés de façon différente ;
(b) la mise en circulation d'un liquide au travers du canal d'écoulement de liquide du premiers rhéomètre à fente(s) et du second rhéomètre à fente(s) et la mesure de la différence en termes de pression détectée par deux capteurs de pression à l'intérieur d'un évidement dimensionné particulier ; et
(c) la comparaison des mesures à l'intérieur des évidements dimensionnés de façon différente pour déterminer la viscosité réelle du liquide.

9. Procédé de mesure de la viscosité d'un liquide selon la revendication 8, dans lequel le premier débit d'écoulement connu et le second débit d'écoulement connu sont les mêmes.

10. Procédé de mesure de la viscosité d'un liquide selon la revendication 8, dans lequel le premier débit d'écoulement connu et le second débit d'écoulement connu sont différents.

11. Procédé de fabrication de rhéomètres à fente(s) selon l'une quelconque des revendications 1 à 5, comprenant :
(a) la formation d'une pluralité de cavités de canal (33) à l'intérieur d'un substrat de canal ou de canaux (30), chaque cavité de canal (33) présentant une largeur uniforme, une longueur uniforme et une profondeur uniforme, et une longueur qui débouche le long d'une surface de jonction du substrat de canal ou de canaux ;
(b) la formation d'une pluralité de cavités (26) soit à l'intérieur d'une membrane de capteur(s) de pression (31), soit à l'intérieur d'un substrat de capteur(s) de pression (32), soit à la fois à l'intérieur d'une membrane de capteur(s) de pression (31) et à l'intérieur d'un substrat de capteur(s) de pression (32), le nombre de cavités (26) qui constituent la pluralité de cavités étant au moins le double du nombre de cavités de canal (33) qui sont formées à l'intérieur du substrat de canal ou de canaux (30) ;
(c) la combinaison de la membrane de capteur(s) de pression (31) avec le substrat de capteur(s) de pression (32) de manière à créer une plaque de capteur(s) de pression, une partie (48) de la membrane de capteur(s) de pression (31) étant étendue au-dessus de cavités respectives (26) de la pluralité de cavités ;
(d) la formation de ce fait de capteurs de pression à l'intérieur de la pluralité de cavités (26) ;
(e) la combinaison de la plaque de capteur(s) de pression avec le substrat de canal ou de canaux (30) le long de la surface de jonction du substrat de canal ou de canaux (30) de manière à fermer la pluralité de cavités de canal (33) le long de la surface de jonction du substrat de canal ou de canaux (30) dans le but de créer une pluralité de canaux d'écoulement de liquide (22) dont chacun comporte une entrée d'écoulement de liquide (20) et une sortie d'écoulement de liquide (21) au travers et par l'intermédiaire desquelles un liquide peut s'écouler, chaque canal d'écoulement de liquide (22) passant au-dessus d'au moins deux de la pluralité de capteurs de pression à l'intérieur de la plaque de capteur(s) de pression, les au moins deux capteurs de pression étant espacés le long de la longueur de chaque canal d'écoulement de liquide (22) de façon suffisante par rapport à l'entrée de canal d'écoulement de liquide (23) et par rapport à la sortie de canal d'écoulement de liquide (24), d'où il résulte qu'une chute de pression de l'écoulement de liquide pleinement développé au travers de chacun des canaux d'écoulement de liquide (22) peut être mesurée ; et
(f) la séparation des canaux d'écoulement de liquide respectifs de la pluralité de canaux d'écoulement de liquide selon une pluralité de canaux d'écoulement de liquide individuels qui comprennent une pluralité de rhéomètres à fente(s) individuels.

12. Procédé de fabrication de rhéomètres à fente(s) selon la revendication 11, dans lequel chaque cavité de canal (33) comporte des extrémités opposées et l'entrée d'écoulement de liquide (23) est étendue au travers du substrat de canal ou de canaux jusqu'à une extrémité de la cavité de canal et la sortie d'écoulement de liquide (24) est étendue au travers du substrat de canal ou de canaux jusqu'à l'extrémité opposée de la cavité de canal.

13. Procédé de fabrication de rhéomètres à fente(s) selon la revendication 12, dans lequel chaque cavité de la pluralité de cavités de canal (33) inclut trois parois de canal et dans lequel la plaque de capteur(s) monolithique(s) forme une quatrième paroi pour chaque cavité de la pluralité de cavités de canal lorsque la plaque de capteur(s) monolithique(s) est combinée avec le substrat de canal ou de canaux (30) pour former la pluralité de canaux d'écoulement de liquide (22).
